# EUROPEAN PATENT SPECIFICATION

(11) **EP 1 919 296 B1**
(45) Date of publication and mention of the grant of the patent: **01.04.2009**
(21) Application number: 06744585.8
(22) Date of filing: 18.04.2006
(51) Int. Cl.: A23G 1/54, A23G 1/00, A23G 3/20, A23G 3/00, A23G 1/21, A23G 3/02

(54) **A PROCESS FOR MAKING FOODSTUFF PRODUCTS, AND A FOODSTUFF PRODUCT THUS MADE**
VERFAHREN ZUR HERSTELLUNG VON NAHRUNGSMITTELN UND SO HERGESTELLTES NAHRUNGSMITTEL
PROCEDE DE FABRICATION DE PRODUITS ALIMENTAIRES, ET PRODUIT ALIMENTAIRE AINSI ELABORE

(30) Priority: 30.08.2005 IT TO20050592
(43) Date of publication of application: 14.05.2008
(73) Proprietor: Soremartec S.A., 6700 Arlon (BE); Ferrero S.p.A., 12051 Alba (IT); FERRERO OFFENE HANDELSGESELLSCHAFT m.b.H., 60599 Frankfurt am Main (DE)
(72) Inventor: MANSUINO, Sergio, I-12084 Mondovì (IT)
(74) Representative: Bosotti, Luciano
(86) International application number: PCT/IB2006/001042
(87) International publication number: WO 2007/026195

(56) References cited:
- EP-A- 0 494 384
- FR-A- 2 069 955
- GB-A- 934 263
- US-A- 1 518 737
- US-A- 3 795 748
- US-A- 3 958 024

## Description

### Field of the invention

The present invention relates to techniques for preparing foodstuff products.

The invention has been developed with particular attention paid to its possible application for making confectionery products.

### Description of the related art

In the area of food products, and specifically in the area of confectionery products, there is a very widespread use of products that comprise an envelope of foodstuff, such as for example chocolate, comprising a shell with a general cup-like configuration having a mouth rim, said shell being closed by a cap (lid or bottom) connected to the mouth rim. A typical example of foodstuffs of the type mentioned previously is represented by chocolates with fillings marketed under the trade-marks Mon Chéri® and Kinder Barrette® by the companies of the Ferrero group. Substantially similar products are disclosed in US-A-3 795 748 and US-A-3 958 024.

The shell of the products to which reference has been made above is usually obtained with an operation of pouring into moulds, which is followed by an operation of trickling (i.e., turning the mould upside down to pour off the excess of chocolate that is still liquid), with possible application of vibration, and subsequent cooling for hardening the chocolate. Then, a mass of filling (a paste, cream and/or liquid) is introduced into the shell thus formed, usually kept with the mouth part facing upwards. Finally, a layer of chocolate that constitutes a lid (or bottom, and hence in any case a cap) is poured on top of the filling for closing the product.

The above basic technique may contemplate a practically infinite number of variant embodiments, considering the specific characteristics of the product that it is desired to make; for example, the mass of filling can present a stratified structure, or else contain within it, for example, a dry fruit, or a fatty cream with fine gas bubbles therein (see e.g. EP-A-0 494 384).

To make explicit reference still to other patent documents (which certainly do not exhaust the panorama on the subject), GB-A-0 934 263 tackles the problem of forming the bottom or cap as an independent part via pouring in a mould of low depth. Specifically, this document of the known art envisages forming the caps, consolidating them, and then applying them on the body of the chocolate, which is subjected to softening in a position corresponding to the mouth rim to enable sealing of the bottom. The document in question relates to the solution of "bevelling" the mouth rim of the body of the chocolate and the peripheral edge of the bottom to bring about an adhesion as intimate as possible between the two parts in question.

EP-A-0 948 899 belongs, instead, to the category of the solutions in which a (non-edible) shell is used as a mould for forming the body of the foodstuff, which is to constitute part of the final packaging of the product.

Furthermore, WO-A-01/78519 tackles the problem of applying a bottom on products that are not to be completely filled with the filling. The solution adopted envisages that the chocolate that is to form the cap for closing will be spread out/rolled on a belt and then cooled sufficiently so as to become rigid and self-supporting for the subsequent step, so as to enable it to be turned upside down, to be carried on top of the shells kept with the cavity facing upwards, and then to be sealed therewith by causing the body of the chocolate to undergo softening at the mouth rim so as to enable sealing of the cap. The excess chocolate of the bottom caps is eliminated via trimming.

Among other thing, the introductory part of WO-A-01/78519 illustrates in a rather extensive way the general problems of the sector.

US-A-1 518 737 discloses manufacturing a cup-shaped chocolate shell, containing a liquid filling and a fruit. In order to seal the chocolate shell, a label-like sealer is used, which is dipped into molten chocolate so that a layer of molten chocolate will adhere to one surface of the sealer. This is brought over to the open portion of the shell, whereby the molten chocolate forms a sealing lid with the mouth portion of the shell.

Finally, FR-A-2 069 955 which was taken as a model for the preamble of claim 1 discloses a method for producing sugar-based candies using centrifugal moulds.

The document contemplates the possibility of sealing to each other two emispherical half-shells that are heated in order to permit connection via their mouth portions.

Specifically, this document describes and illustrates an arrangement wherein a hemispherical half-shell is urged downwardly to be connected to a lower hemispherical half-shell that contains a filling mass and the lower half-shell is kept with its mouth portion facing upwardly.

### Object and summary of the invention

Notwithstanding the extensive activity documented by the related art to which reference has been made previously, there is still felt in the sector the need to have available solutions capable of satisfying - simultaneously - different needs, which in effect may even be in contrast with one another.

A first need is to cause the cap (bottom or lid) of the foodstuff to have characteristics which can be controlled in a precise way. This result is not in general obtainable operating by pouring, i.e., depositing molten material such as chocolate on top of the shell previously filled and kept with the mouth part facing upwards. Except for cases that are altogether particular, the top level of the filling is usually quite irregular, and the inner surface (that is the surface facing the filling) of the cap made by pouring is consequently also irregular. In the case a lid having a substantially constant thickness is desired, this entails the risk that the aforesaid bottom will have in some areas an excessively small thickness (with consequent risk of cracking) or else with the opposite risk represented by the fact that, with the aim of preventing areas that are too thin, the aforesaid bottom/lid is too thick in other areas, thus offering an undesirable resistance to the action of chewing when the product is consumed. The same remarks essentially apply in the case a lid having a nonuniform thickness is desired (e.g. a lid that is thicker at the center than at the sides of the product or a lid provided externally with decorations such a pattern of parallel ribs or possibly in the form of scupluring such as a bas-relief: the underlying problem with the conventional pouring technique lies in that such a technique does not permit to determine and control precisely the characteristics of the lid. In addition to this, it is evident that the solution of making the bottom or cap (namely the lid) by pouring is not practicable in the case of hollow foodstuffs or foodstuffs that are not to be completely filled.

Another need is represented by the fact that the seal between the mouth rim of the shell and the bottom/lid must be as regular, uniform and firm as possible, the aim being to prevent any possible detachment of the bottom/lid from the body of the foodstuff or even just possible undesirable phenomena of leakage of components of the filling out of the envelope of the foodstuff. In other words, it is desirable that the envelope of the product should in effect be a hermetic container.

The arrangement disclosed in US-A-1 518 737 leads away from solving the set of problems described in the foregoing, for a number of basic reasons. In the first place, the chocolate layer that is formed (essentially due to surface adhesion phenomena) on the label-like sealer, which is then brought over to the shell has, by way of necessity, a reduced thickness. In fact, the label-like sealer in question is not a mould proper, not can it be paralleled to a mould as such a label has no effective moulding "depth". In the case of the label-like sealer, the chocolate in excess to the chocolate adhered to the label is inevitably "poured off" the sealer, which makes it impossible to produce lids having a certain thickness (e.g. 3 - 4 mm). Additionally, such a thickness, and, more generally, the morphology of the surface of the lid facing inside the product, are dictated by the rheology of the chocolate used, which fact limits in an absolute way the possibility of selecting the thickness of the lid. Additionally, the solution described in US-A-1 518 737 (a document dating back to the '20s) was evidently conceived with a view to manual operation, so that it is very difficult to envisage.the possible application thereof in an industrial process carried out in a thoroughly automated manner with the timings and volumes of production that are nowadays common in the food industry. In such a context, the label-like sealers would represent by themselves a huge amount of production waste hard to be dispensed with.

The arrangement disclosed in FR-A-2 069 955 similarly leads away from solving the set of problems described in the foregoing. In the first place, the need - which is imperative for the arrangement described in FR-A-2 069 955 - of keeping heated the two shell elements being joined militates against the possibility of performing such operation when one of the two elements is a half-shell already containing a mass of filling: this makes it practically inevitable for such a half-shell to be kept with its mouth portion facing upwardly. Additionally, the degree of effective resistance or seal of the connection between the two half-shells obtained by using the method disclosed in FR-A-2 069 955 is rather critical, especially when the material used is different from a sugar-based material, which is intrinsically rather "tacky".

The object of the present invention is to provide a technique that is able to satisfy all the needs outlined previously in an optimal and simultaneous way.

According to the present invention, that object is achieved thanks to a process having the characteristics referred to specifically in Claim 1 that follows.

The annexed claims form an integral part of the technical disclosure provided herein in relation to the invention.

Basically, the solution according to the invention enables simultaneous satisfaction of at least three basic needs:
- formation of a bottom or lid whose inner surface, facing inside the product, is substantially flat and uniform, with the ensuing possibility of producing, e.g. bottoms or lids of substantially constant and/or controlled thickness, while retaining the possibility of having an outer surface of the lid carrying at will decorations or sculpturing (high- and bas-relief);
- connection of the body or shell of the foodstuff and the bottom/lid (cap), bestowing upon the envelope of the product as a whole characteristics of hermetic seal; this, both as regards the possible exit of components of the filling outwards, and as regards the undesirable penetration of agents into the product from outside; and
- reduction to a minimum (and, in effect, elimination) of the formation of waste, accompanied by optimization of the production process since, for example, it is not necessary to extract the caps from any moulds in order to connect them to the rest of the product.

The whole of the foregoing within the framework of an industrial process adapted to be carried out in a thoroughly automated manner with the timings and volumes of production that are nowadays common in the food industry.

In the meantime, the arrangement described herein makes it possible to produce a confectionery product, wherein, contrary to what happens, for instance, in the products described in EP-A-0 494 384, GB-A-0 934 263, US-A-3 795 748 or US-A-3 958 024, the shell portion comprising the body of the product is closed by a lid having a surface connected to the mouth rim of the shell which is subtantially flat and uniform, with a meniscus formation that at least marginally rises over the rim of the shell by providing in a thoroughly reliable manner a hermetic seal of the product by avoiding, for instance, undesired leakage of the filling out of the product and/or penetration of external agents into the product.

### Brief description of the annexed drawings

The invention will now be described, purely by way of non-limiting example, with reference to the annexed figures of drawing, in which:

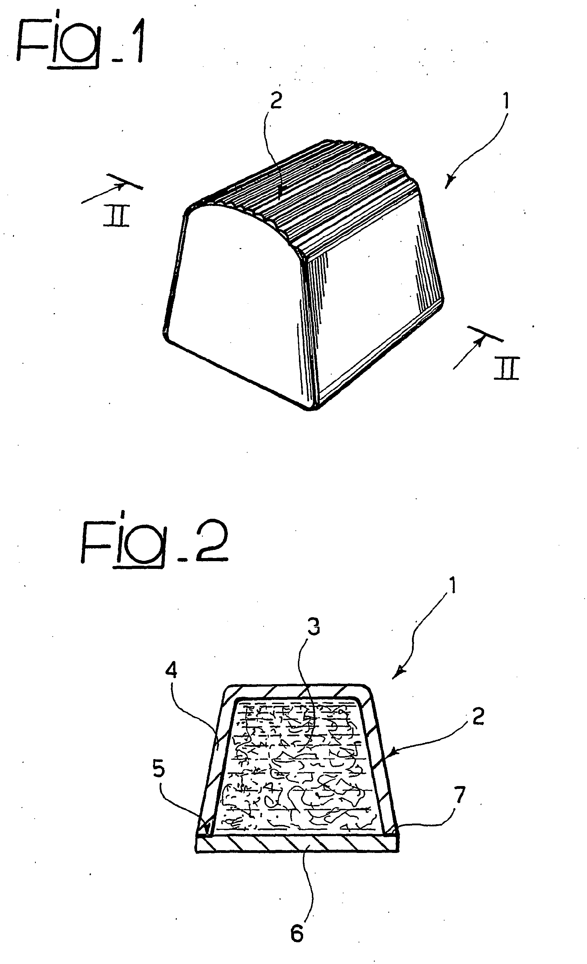

- Figure 1 is a general perspective view of a foodstuff made according to the solution described herein;
- Figure 2 is a vertical cross-sectional view according to the line II-II of Figure 1; and
- Figure 3 is a schematic illustration of various steps of the process described herein.

### Description of an exemplary embodiment of the invention

In the annexed figures of drawing, the reference number 1 designates, as a whole, a foodstuff, such as, for example, a confectionery product.

By way of reference (of course, without this necessarily being interpreted in any sense as limiting the scope of the invention), the product 1 can be constituted by a filled chocolate or by a similar product, such as the products of the Ferrero group to which reference has already been made in the introductory part of the present description.

The product 1 in question includes an envelope 2 of alimentary material (such as, for example, chocolate) which is able to enclose within it a filling 3. The characteristics of this filling., that is, for example, the composition, the consistency (liquid, creamy or pasty), the fact of being comprised of one or more elements (for instance, a plurality of layers of different materials) and/or the possible presence of additional elements (for example, a fruit such as a cherry or a dry fruit present in the filling), do not constitute elements in themselves significant for the purposes of implementation and understanding of the present invention. Furthermore, for the purposes of the invention described herein, the fact that the filling 3 is such as to fill the envelope 2 completely is not a determining factor; instead, at least in principle, the filling 3 can even be altogether absent.

The envelope 2 is made with a food mass that can be solidified. In what follows, specific reference will be made to chocolate, but the sphere of application of the invention is not in itself limited just to chocolate.

In this connection, it is pointed out that the term "chocolate" is used herein with reference to the physical characteristics (basically the rheological characteristics) of the material. In such a perspective, the term chocolate, as used herein, applies also to those substances that, according to their chemical composition (for example, content of cocoa, cocoa butter, etc.) might not satisfy specific requisites imposed by standards, whether current or future, linked to the use of the term "chocolate". It is in fact evident that said standards can change over time, the same not applying to the physical and rheological characteristics of the material.

Likewise, in the sequel of the present description reference will be made, at least principally, to an envelope 2 constituted in all its parts by homogeneous material. This aspect does not, however, constitute a binding element for the purposes of implementation of the invention. The invention in fact finds an application also in the case where the envelope 2 is made with different materials: just to provide an example, an envelope comprising parts made of different materials (for example bitter chocolate, milk chocolate, white chocolate, and/or materials different from chocolate).

Given these premises, within the envelope 2 two parts may basically be distinguished, namely:
- a body or shell 4 presenting a general cup-shaped or tank-shaped configuration delimited by a mouth rim 5 and such as to contain within it the filling 3 (if present); and
- a bottom or lid (in what follows referred to, for reasons of brevity, as "cap") 6, connected to the shell 4 along the mouth part 5 in a position corresponding to an area of sealing designated by 7.

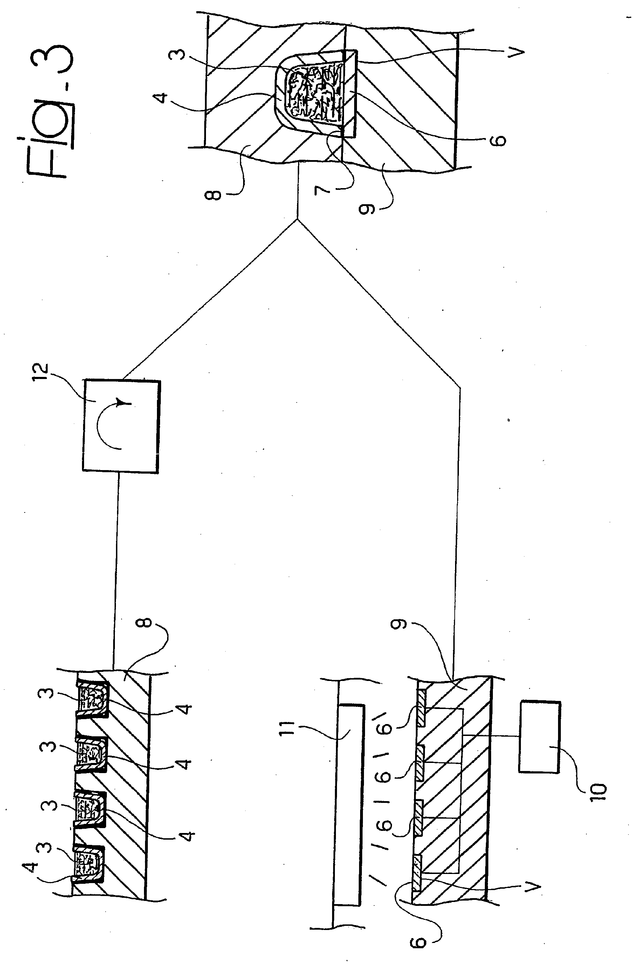

The part furthest to the left in Figure 3 indicates schematically the operating steps of the production process of the product 1, which lead:
- on the one hand, to the formation of the shell 4 possibly provided inside with a mass of filling 3; and
- on the other hand, to the formation of the caps 6, which are to be applied for closing the shells 4.

For formation of the shells 4 with the filling mass 3 inside them, it is possible to resort to any solution known in the sector, such as, for example, various solutions among the ones illustrated in the documents of the known art, to which reference has been made in the introductory part of the present description. In general, these techniques envisage that the shell 4 be formed (or deposited) in cavities provided in a mould 8.

This applies, to a certain extent, also to the process of fabrication of the caps 6. These are basically constituted by plates of foodstuff mass (typically chocolate) having a thickness typically of between 0.2 mm and 4 mm, obtained via moulding by pouring into a mould 9 provided with cavities V. The mould in question can assume - for example - the form of a mould consisting of alveolar trays, or else the form of a belt for pouring provided with recesses forming pouring cavities. These solutions are widely used in the foodstuff industry.

An important characteristic of the solution described herein lies in the fact that the caps 6 are coupled to the shells 4 - preferably already solidified - whilst the caps 6 themselves (i.e., the foodstuff poured into the corresponding formation mould) are in the molten state (the term "molten state" including also the condition of softening): in these conditions the free surface of the mass in question, namely the surface at the interface between the mass in the molten state within the mould and the atmosphere, is substantially flat and uniform.

The result described can be achieved by coupling the caps 6, just formed in the cavities V, to the shells 4. Alternatively, it is possible to envisage an operation of heating that involves the positive heating of the mould 9 in which the cavities V are provided using a heating source designated as a whole by 10 (it may, for example, be a source of electrical energy that supplies heating resistors embedded in the mould 9) and/or an action of surface heating, exerted, for example, using infrared lamps 11.

The caps 6 in the molten state are made to advance under the shells 4, which, in a turning-over station designated by 12, are rotated through 180° so as to orient the mouth part of the shells 4 so that this is open not upwards but downwards. This operation of turning-over can be carried out by resorting to turning-over units of a known type, such as, for example, those described in EP-A-0 945 070 and again EP-A-0 083 324, EP-A-0 583 739 or EP-A-0 766 922.

Also in the case where the filling 3 is present in the shells 4, the action of turning upside down exerted in the station 12 does not in general involve any dropping-out of the filling 3.

The operation of turning upside down is in fact carried out in such a way that the shells 4 with the filling 3 are kept in a position facing downwards only for a very short interval of time before being coupled to the caps 6. In any case, even where the filling presents high characteristics of fluency (since it is, for example, a liquid or syrupy filling), it is possible to adopt solutions (for example cooling) such as to prevent dispersion of the filling from the shell.

In the turned-over conditions obtained as a result of the action of the station 12, the shells 4 are brought on top of the respective caps 6 in the molten state. For the very fact that it is as a whole in the molten state, each cap 6 can be sealed with the mouth part 5 of the shell 4, thus completing the formation of the envelope 2 of the foodstuff 1.

It may also be noted that the process of sealing of the caps 6 to the shells 4 involves two phenomena that both contribute to obtaining a seal with hermetic characteristics.

In the first place, the substance constituting the cap, in the molten state, and hence hot, transfers part of its heat to the rim of the shell, which is thus.also brought into the molten state, thus promoting the intimate connection or fusion between two masses, both of which are in the molten state.

In the second place, before hardening, the substance constituting the cap, in the molten state, rises at least marginally as far as the rim of the shell, to form a sort of meniscus, thus "embracing" the rim of the shell and providing what is in effect a hermetic seal.

Advantageously, the rising of the meniscus just described can be stimulated by means of an external action (such as beating or applying ultrasound), performed in manner known per se.

Once the seal with the shell 5 has been achieved, the cap 6 can be subjected to cooling so as to bring about solidification thereof, and bestow upon the envelope 2 the necessary qualities of mechanical consistency in all its constitutive parts. The action of cooling can be carried out operating on the mould 9, and in particular operating on the thermal conditioning unit 10. In addition to heating elements, the unit 10 can in fact govern cooling elements, such as Peltier-effect elements, embedded in the mould 9. These elements are able to lower the temperature of the mould 9 gradually, and hence that of the caps 6 so as to provide cooling and consolidation thereof following a precisely determined and controlled time law, thus preventing any adverse phenomena, linked, for example, to the undesirable surfacing of various components and of the mass of chocolate.

All this while otherwise maintaining the desired, substantially flat conformation (with peripheral meniscus) of the "inner" surface of the cap 6, facing inside the product 1; in fact such "inner" surface derives from the consolidation of the free surface of the chocolate mass poured in the cavities of the mould 9.

The product 1 thus completed can then be removed from the moulds 8 (if they have not already been removed previously) and 9, to be followed by start of the subsequent operations of treatment (wrapping, boxing, etc.), carried out according to the current criteria of the sector.

Of course, without prejudice to the principle of the invention, the details of implementation and the embodiments may vary widely with respect to what is described and illustrated herein, without thereby departing from the scope of the invention, as defined by the annexed claims.

## Claims

1. A process for making foodstuff products (1) with an envelope (2) of foodstuff comprising a shell (4) with a general cup-like configuration having a mouth rim (5), said shell (4) being closed by a cap (6) connected to said mouth rim (5), the process comprising the steps of:
- making said shell (4);
- making said cap (6) by pouring foodstuff into a mould (9);
- achieving the consolidation of said cap (6),
**characterized in that** it includes:
- connecting said cap (6) to said shell (4) whilst said foodstuff poured into said mould (9) is in the molten state with a free surface that is flat, by bringing about connection of said cap (6) with the mouth rim (5) of said shell (4), whereby said free surface lies inside the product after connection; and
- achieving the consolidation of said cap (6) connected to said shell (4).

2. The process according to Claim 1, **characterized in that** it comprises the step of choosing, as said foodstuff, chocolate.

3. The process according to Claim 1 or Claim 2, **characterized in that** it comprises the step of using mutually different foodstuffs for making said shell (4) having a general cup-like configuration and said lid or bottom (6).

4. The process according to any one of the preceding claims, **characterized in that** it comprises the step of making said cap (6) as a substantially plane element.

5. The process according to any one of the preceding claims, **characterized in that** it comprises the step of making said cap (6) with an external surface provided with formations such as decorations or high- and bas-reliefs.

6. The process according to any one of the preceding claims, **characterized in that** it comprises the step of making said cap (6) with a thickness of between 0.2 mm and 4 mm.

7. The process according to any one of the preceding claims, **characterized in that** it comprises the step of introducing a filling (3) into said shell (4) .

8. The process according to claim 7, **characterized in that** it comprises the step of introducing into said shell (4) a filling (3) including distinct elements.

9. The process according to any one of the preceding claims, **characterized in that** it comprises the step of introducing into said shell (4) a filling including a fruit.

10. The process according to any one of the preceding claims, **characterized in that** it comprises the step of making said shell (4) with said mouth rim (5) facing upwards and the step (12) of turning said shell (4) upside down, with said mouth rim (5) oriented downwards for the purpose of connection of said cap (6).

11. The process according to Claims 7 and 10, **characterized in that** it comprises the step of introducing said filling (3) into said shell (4) prior to said step (12) of turning said shell (4) upside down.

12. The process according to Claim 11, **characterized in that** it comprises the step of consolidating said filling (3) prior to said operation of turning upside down (12).

13. The process according to any one of the preceding claims, **characterized in that** it comprises the step of obtaining the consolidation of said cap (6) connected to said shell (4) via controlled cooling (10) of said foodstuff.

14. The process according to any one of the preceding claims, **characterized in that** it comprises the step of consolidating said shell (4) before connecting said cap (6) to said shell (4), whereby said foodstuff poured into said mould (9) in the molten state at least marginally rises meniscus-like over the rim of said consolidated shell (4).

15. The process according to claim 14, **characterized in that** it comprises the step of exerting an action, such as a mechanical action and/or applying ultrasound, to facilitate rising of said meniscus.

## Patentansprüche

1. Verfahren zur Herstellung von Nahrungsmittelprodukten (1) mit Nahrungsmittelhülle (2), umfassend einen Mantel (4) mit allgemein tassenartiger Konfiguration mit Öffnungsrand (5), wobei der Mantel (4) mit einer mit dem Öffnungsrand (5) verbundenen Kappe (6) verschlossen ist, wobei das Verfahren die folgenden Schritte umfasst:
- Herstellen des Mantels (4);
- Herstellen der Kappe (6) durch Giessen von Nahrungsmittel in eine Form (9);
- Verfestigen der Kappe (6);
**dadurch gekennzeichnet, dass** es einschliesst:
- Verbinden der Kappe (6) mit dem Mantel (4), während das in die Form (9) gegossene Nahrungsmittel im geschmolzenen Zustand eine freie, flache Oberfläche besitzt, indem die Kappe (6) mit dem Öffnungsrand (5) des Mantels (4) verbunden wird, wodurch die freie Oberfläche nach dem Verbinden innerhalb des Produkts liegt; und
- Verfestigen der mit dem Mantel (4) verbundenen Kappe (6).

2. Verfahren gemäss Anspruch 1, **dadurch gekennzeichnet, dass** es den Schritt der Auswahl von Schokolade als Nahrungsmittel umfasst.

3. Verfahren gemäss Anspruch 1 oder Anspruch 2, **dadurch gekennzeichnet, dass** es den Schritt der Verwendung von zueinander unterschiedlichen Nahrungsmitteln zur Herstellung des Mantels (4) mit allgemein tassenartiger Konfiguration und der Kappe oder dem Boden (6) umfasst.

4. Verfahren gemäss einem der vorhergehenden Ansprüche, **dadurch gekennzeichnet, dass** es den Schritt der Herstellung der Kappe (6) als ein im wesentlichen flaches Element umfasst.

5. Verfahren gemäss einem der vorhergehenden Ansprüche, **dadurch gekennzeichnet, dass** es den Schritt der Herstellung der Kappe (6) mit einer äusseren Oberfläche, die mit Anordnungen, wie Dekoren oder Hoch- und Flachreliefs, versehen ist, umfasst.

6. Verfahren gemäss einem der vorhergehenden Ansprüche, **dadurch gekennzeichnet, dass** es den Schritt der Herstellung der Kappe (6) mit einer Dicke zwischen 0,2 und 4 mm umfasst.

7. Verfahren gemäss einem der vorhergehenden Ansprüche, **dadurch gekennzeichnet, dass** es den Schritt des Einführens einer Füllung (3) in den Mantel (4) umfasst.

8. Verfahren gemäss Anspruch 7, **dadurch gekennzeichnet, dass** es den Schritt des Einführens einer Füllung (3), einschliesslich unterscheidbarer Elemente, in den Mantel (4) umfasst.

9. Verfahren gemäss einem der vorhergehenden Ansprüche, **dadurch gekennzeichnet, dass** es den Schritt des Einführens einer Füllung, einschliesslich einer Frucht, in den Mantel (4) umfasst.

10. Verfahren gemäss einem der vorhergehenden Ansprüche, **dadurch gekennzeichnet, dass** es den Schritt des Herstellens des Mantels (4) mit nach oben gerichtetem Öffnungsrand (5) und den Schritt (12) des Umdrehens des Mantels (4), wobei der Öffnungsrand (5) zur Verbindung der Kappe (6) nach unten orientiert ist, umfasst.

11. Verfahren gemäss Ansprüchen 7 und 10, **dadurch gekennzeichnet, dass** es den Schritt des Einführens der Füllung (3) in den Mantel (4) vor dem Schritt (12) des Umdrehens des Mantels (4) umfasst.

12. Verfahren gemäss Anspruch 11, **dadurch gekennzeichnet, dass** es den Schritt des Verfestigens der Füllung (3) vor dem Umdrehvorgang (12) umfasst.

13. Verfahren gemäss einem der vorhergehenden Ansprüche, **dadurch gekennzeichnet, dass** es den Schritt des Verfestigens der mit dem Mantel (4) verbundenen Kappe (6) über gesteuertes Kühlen (10) des Nahrungsmittels umfasst.

14. Verfahren gemäss einem der vorhergehenden Ansprüche, **dadurch gekennzeichnet, dass** es den Schritt des Verfestigens des Mantels (4) vor dem Verbinden der Kappe (6) mit dem Mantel (4) umfasst, wodurch das Nahrungsmittel, das im geschmolzenen Zustand in die Form (9) gegossen wurde, zumindest geringfügig meniskusartig über den Rand des verfestigten Mantels (4) ansteigt.

15. Verfahren gemäss Anspruch 14, **dadurch gekennzeichnet, dass** es den Schritt der Ausübung einer Wirkung, wie einer mechanischen Wirkung und/oder dem Anlegen von Ultraschall, zum Erleichtern des Anstiegs des Meniskus umfasst.

## Revendications

1. Procédé pour la préparation de produits alimentaires (1) ayant une enveloppe (2) de produit alimentaire comportant une coque (4) d'une configuration générale analogue à un godet ayant un bord (5) d'embouchure, ladite coque (4) étant fermée par un chapeau (6) relié audit bord (5) d'embouchure, le procédé comprenant les étapes qui consistent :
- à réaliser ladite coque (4) ;
- à réaliser ledit chapeau (6) en versant du produit alimentaire dans un moule (9) ;
- à obtenir la consolidation dudit chapeau (6),
**caractérisé en ce qu'**il comprend :
- la liaison dudit chapeau (6) à ladite coque (4) tandis que ledit produit alimentaire versé dans ledit moule (9) est dans l'état fondu avec une surface libre qui est plate, en réalisant la liaison dudit chapeau (6) avec le bord (5) d'embouchure de ladite coque (4), grâce à quoi ladite surface libre s'étend à l'intérieur du produit après la liaison ; et
- l'obtention de la consolidation dudit chapeau (6) reliée à ladite coque (4).

2. Procédé selon la revendication 1, **caractérisé en ce qu'**il comprend l'étape consistant à choisir du chocolat en tant que ledit produit alimentaire.

3. Procédé selon la revendication 1 ou la revendication 2, **caractérisé en ce qu'**il comprend l'étape consistant à utiliser des produits alimentaires mutuellement différents pour réaliser ladite coque (4) ayant une configuration générale analogue à un godet et ledit couvercle ou fond (6).

4. Procédé selon l'une quelconque des revendications précédentes, **caractérisé en ce qu'**il comprend l'étape de réalisation dudit chapeau (6) sous la forme d'un élément sensiblement plan.

5. Procédé selon l'une quelconque des revendications précédentes, **caractérisé en ce qu'**il comprend l'étape de réalisation dudit chapeau (6) avec une surface extérieure pourvue de conformations telles que des décorations ou des hauts- et bas-reliefs.

6. Procédé selon l'une quelconque des revendications précédentes, **caractérisé en ce qu'**il comprend l'étape de réalisation dudit chapeau (6) à une épaisseur comprise entre 0,2 mm et 4 mm.

7. Procédé selon l'une quelconque des revendications précédentes, **caractérisé en ce qu'**il comprend l'étape d'introduction d'une garniture (3) dans ladite coque (4).

8. Procédé selon la revendication 7, **caractérisé en ce qu'**il comprend l'étape d'introduction dans ladite coque (4) d'une garniture (3) comprenant des éléments distincts.

9. Procédé selon l'une quelconque des revendications précédentes, **caractérisé en ce qu'**il comprend l'étape d'introduction dans ladite coque (4) d'une garniture comprenant un fruit.

10. Procédé selon l'une quelconque des revendications précédentes, **caractérisé en ce qu'**il comprend l'étape de réalisation de ladite coque (4) avec ledit bord d'embouchure (5) tourné vers le haut et l'étape (12) consistant à retourner à l'envers ladite coque (4), avec ledit bord d'embouchure (5) orienté vers le bas à des fins de liaison dudit chapeau (6).

11. Procédé selon les revendications 7 et 10, **caractérisé en ce qu'**il comprend l'étape d'introduction de ladite garniture (3) dans ladite coque (4) avant ladite étape (12) consistant à retourner à l'envers ladite coque (4).

12. Procédé selon la revendication 11, **caractérisé en ce qu'**il comprend l'étape de consolidation de ladite garniture (3) avant ladite opération de retournement à l'envers (12).

13. Procédé selon l'une quelconque des revendications précédentes, **caractérisé en ce qu'**il comprend l'étape d'obtention de la consolidation dudit chapeau (6) relié à ladite coque (4) par l'intermédiaire d'un refroidissement commandé (10) dudit produit alimentaire.

14. Procédé selon l'une quelconque des revendications précédentes, **caractérisé en ce qu'**il comprend l'étape de consolidation de ladite coque (4) avant la liaison dudit chapeau (6) à ladite coque (4), grâce à quoi ledit produit alimentaire versé dans ledit moule (9) dans l'état fondu monte au moins marginalement à la manière d'un ménisque au-dessus du bord de ladite coque (4) consolidée.

15. Procédé selon la revendication 14, **caractérisé en ce qu'**il comprend l'étape consistant à exercer une action, telle qu'une action mécanique et/ou l'application d'ultrasons, pour faciliter la montée dudit ménisque.
